# EUROPÄISCHE PATENTSCHRIFT

(11) **EP 1 866 538 B1**
(45) Veröffentlichungstag und Bekanntmachung des Hinweises auf die Patenterteilung: **18.01.2012**
(21) Anmeldenummer: 06722671.2
(22) Anmeldetag: 24.03.2006
(51) Int. Cl.: F02G 5/04, F02B 41/10, F16H 61/00

(54) **VERBUNDGETRIEBE**
COMPOUND TRANSMISSION
TRANSMISSION MIXTE

(30) Priorität: 26.03.2005 DE 102005014000
(43) Veröffentlichungstag der Anmeldung: 19.12.2007
(73) Patentinhaber: Schaeffler Technologies GmbH & Co. KG, 91074 Herzogenaurach (DE)
(72) Erfinder: SCHENCK, Kai Sebastian, 77654 Offenburg (DE); REIK, Wolfgang, 77815 Bühl (DE); MÜLLER, Bruno, 77880 Sasbach (DE)
(86) Internationale Anmeldenummer: PCT/DE2006/000519
(87) Internationale Veröffentlichungsnummer: WO 2006/102868

(56) Entgegenhaltungen:
- US-A- 2 401 677
- US-A- 2 507 946
- US-A- 2 880 571
- US-A- 4 622 818
- US-A- 4 729 225
- US-A- 4 953 517
- US-A- 5 323 610

## Beschreibung

Die Erfindung betrifft ein Verbundtriebwerk in Verbindung mit einer Brennkraftmaschine gemäß dem Oberbegriff des Anspruches 1.

Verbundtriebwerke werden auch Turbocompound genannt. Bei derartigen Verbundtriebwerken wird der Abgasstrom einer Brennkraftmaschine - in vielen Fällen bei einem Dieselmotor - über die Abgasturbine eines Turboladers geleitet. Über einen hiermit drehfest verbundenes Gebläse wird die Ladeluft dem Verbrennungsmotor zugeführt. In dem weiteren Verlauf der Abgase gelangen diese beim Stand der Technik - in Verbindung mit einem Verbundtriebwerk - über eine zweite Turbine. Diese zweite Turbine leitet ihre Rotationsenergie ggf. in ein Reduktionsgetriebe, welches dann wiederum mit einer Föttingerkupplung verbunden ist. Nach der Föttingerkupplung kann dann wiederum ein Reduktionsgetriebe vorhanden sein, um die Drehzahlen weiter zu reduzieren. Schließlich wird die Rotationsenergie in die Kurbelwelle oder in die Schwungmasse des Verbrennungsmotors eingeleitet. Durch einen derartigen Aufbau wird der Energieinhalt der Abgase zur Steigerung der Antriebsenergie des Verbrennungsmotors genutzt.

Durch den Einsatz der Föttingerkupplung werden Drehungleichförmigkeiten zwischen der Kurbelwelle und dem Turbolader ausgeglichen. Ein starrer Antriebsstrang des Verbundtriebwerkes würde sonst Drehungleichförmigkeiten der Kurbelwelle bis hin zur Nutzturbine leiten, welches zu erheblichen Torsionsschwingungsproblemen führen würde.

Der Aufbau einer Föttingerkupplung ist konstruktiv sehr aufwendig, wodurch diese Lösung deshalb auch sehr kostspielig ist. Weiterhin ist der Wirkungsgrad durch den systembedingten Schlupf nicht optimal.

Es ist deshalb Aufgabe der Erfindung, ein Verbundtriebwerk bereit zu stellen, welches zum einen Torsionsschwingungen minimiert und zum anderen kostengünstig ist.

Die Aufgabe wird dadurch gelöst, dass anstelle einer Föttingerkupplung in einem Verbundtriebwerk ein Torsionsschwingungsdämpfer eingesetzt wird. Eine solche Anordnung ist aus US 4 622 818 A bekannt. Der erfindungsgemäβe Torsionsschwingungsdämpfer besteht aus einem Eingangsteil und einem Ausgangsteil, wobei zwischen dem Ein- und Ausgangsteil umfänglich wirkende Energiespeicher in Form von Schraubenfedern angeordnet sind.

In einer zweiten Ausgestaltung des Torsionsschwingungsdämpfers ist ebenfalls ein Ein- und Ausgangsteil vorhanden, jedoch bewegen sich zwischen dem Ein- und Ausgangsteil Wälzkörper auf in beide Richtungen hin gemeinte Rampen. Das Ein- und Ausgangsteil sind hierbei axial gegeneinander verspannt (beispielsweise mittels einer Tellerfeder).

Bei einer Föttingerkupplung erfolgt die rotatorische Kopplung von der Pumpenseite zur Turbinenseite mittels des hydrodynamischen Prinzips. Dadurch können auch - zumindest teilweise - auch Torsionsschwingungen eliminiert werden. Da wegen des hydrodynamischen Prinzips innerhalb der Föttingerkupplung keine drehfeste Verbindung existiert, können die Drehzahlen zwischen der Pumpen- und Turbinenseite schwanken, ohne dass die Drehmomentübertragung gestört wird.

Im Gegensatz hierzu ist bei einem Verbundtriebwerk ohne Föttingerkupplung, aber mit einem Torsionsschwingungsdämpfer immer eine drehfeste Verbindung. Ein Torsionsschwingungsdämpfer hingegen lässt nur relativ kleine Relativdrehwinkel zwischen Eingangs- und Ausgangsteil zu. Diese Winkelbeträge können dabei maximal +/- 90° ausmachen. Mit anderen Worten: Bei einem Torsionsschwingungsdämpfer sind die Drehbewegungen des Ein- und Ausgangsteils - abgesehen von den sich überlagernden Schwingungen - immer drehsynchron. Ein "Überholen" des Eingangteiles gegenüber dem Ausgangsteil ist beim Torsionsschwingungsdämpfer nicht möglich. Vor diesem Hintergrund ist es deshalb umso erstaunlicher, dass ein Verbundtriebwerk mit einem Torsionsschwingungsdämpfer anstelle einer Föttingerkupplung realisierbar ist.

Die Erfindung soll nun anhand der Figuren näher erläutert werden.

Es zeigen:
- Figur 1: Eine schematische Darstellung des Standes der Technik;
- Figur 2: eine schematische Darstellung gemäß der Erfindung;
- Figur 3: eine Schnittdarstellung eines Torsionsschwingungsdämpfers;
- Figur 4: eine Schnittdarstellung durch eine weitere Ausgestaltung eines Torsionsschwingungsdämpfers;
- Figur 5: eine Schnittdarstellung durch eine Ausgestaltung eines Torsionsschwingungsdämpfers mit Freilauf.

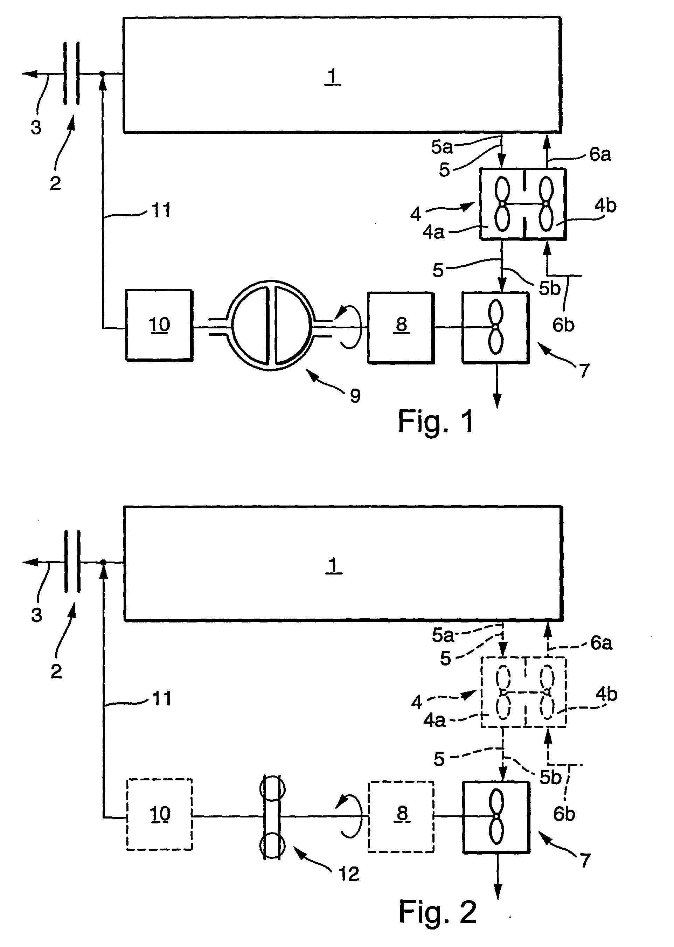

In der Figur 1 ist eine Brennkraftmaschine 1 über eine Abgasleitung 5a mit einem Turbolader 4 verbunden. Der Turbolader 4 unterteilt sich in die Abgasturbine 4a und die Ladeluftturbine 4b. Bei einem Betrieb des Turboladers 4 wird dann ein Ladeluftstrom 6b über die Ladeluftturbine 4b zum Ladeluftstrom 6a, der in die Brennkraftmaschine 1 geblasen wird.

Im weiteren Verlauf der Abgasleitung 5 existiert die Abgasleitung 5b, die mit einer Verbundtriebwerks-Turbine 7 strömungstechnisch verbunden ist. Hier erfolgt eine zweite Ausbeute der Abgasluft, wobei hier dann rotatorische Energie für das Verbundtriebwerk gewonnen werden soll. Die Verbundtriebwerks-Turbine 7 ist drehfest mit einem Reduktionsgetriebe verbunden. Dieses Reduktionsgetriebe 8 soll die hohe Drehzahl der Verbundtriebwerks-Turbine 7 auf die Nenndrehzahl der nachgeschalteten Föttingerkupplung 9 reduzieren. Die rechte Seite der Föttingerkupplung 9 stellt hierbei die Pumpe dar, während die linke Halbschale der Föttingerkupplung, die Turbine verkörpert. Ein weiteres Reduktionsgetriebe 10 ist drehfest mit der linken Seite der Föttingerkupplung - also der Turbine - verbunden. Hiernach erfolgt eine mechanische Verbindung 11 des Reduktionsgetriebes 10 mit der Kurbelwelle oder der Schwungscheibe. Die Kurbelwelle oder die Schwungscheibe würden hierbei für den Kraftfluß einen Einspeisungspunkt darstellen. Entscheidend ist hierbei lediglich, dass der Einspeisungspunkt auf der Motorseite der Kupplung 2 liegt. Eine Einspeisung in eine Getriebeeingangswelle 3 würde keinen Sinn machen, da bei einer laufenden Brennkraftmaschine 1 sonst nie ein antriebsloser Zustand herbeiführbar wäre.

Durch den direkten Vergleich der Figur 2 mit der soeben beschriebenen Figur 1 kann das erfindungsgemäße Verbundtriebwerk gut beschrieben werden. Wie aus der Figur 2 zu entnehmen ist, ist erfindungsgemäß das Vorhandensein eines Turboladers 4 nicht zwingend erforderlich. Erfindungswesentlich ist lediglich, dass eine Abgasleitung 5 über die Verbundtriebwerks-Turbine 7 geleitet wird. Ein dazwischen geschalteter Turbolader 4 wäre rein fakultativ. Auch das Vorhandensein von zwei Reduktionsgetrieben 8 und 10 ist nicht zwingend erforderlich. Wichtig ist lediglich ein Reduktionsgetriebe 8 oder 10, denn es gilt die hohe Drehzahl der Verbundtriebwerks-Turbine 7 auf die Drehzahl der Kurbelwelle abzustimmen. Dies kann entweder mit dem Reduktionsgetriebe 8 zwischen Verbundtriebwerks-Turbine 7 und dem Torsionsschwingungsdämpfer 12 erfolgen, oder kann auch zwischen dem Torsionsschwingungsdämpfer 12 und der mechanischen Verbindung 11 zur Kurbelwelle bzw. zum Schwungrad realisiert werden. In einer weiteren Ausgestaltung der Erfindung können aber auch - wie aus dem Stand der Technik bereits bekannt - beide Reduktionsgetriebe 8 und 10 Anwendung finden.

Der in der Figur 2 schematisch dargestellte Torsionsschwingungsdämpfer 12 besteht aus einem rechten, scheibenförmigen Eingangsteil und einem linken, ebenfalls scheibenförmigen Ausgangsteil. Zwischen dem Ein- und Ausgangsteil befindet sich mindestens ein umfänglich wirkender Energiespeicher, der als Schraubenfeder ausgestaltet ist. In einer weiteren Ausgestaltung der Erfindung sind mehrere umfänglich wirkende Energiespeicher vorhanden, wobei diese parallel und/oder in Reihe geschaltet sein können. Durch ein betreffende Ausgestaltung des Torsionsschwingungsdämpfers 12 kann hierbei das Dämpfungsverhalten und damit die Frequenzgangkurve beeinflusst werden. Indem man Energiespeicher mit unterschiedlichen Federkennlinien kombiniert, kann man Gesamt-Federkennlinien generieren, die entweder progressiv oder auch degressiv gestaltet sind. In einer weiteren Ausgestaltung der Erfindung sind die Energiespeicher am äußersten Durchmesser des Torsionsschwingungsdämpfers 12 angeordnet. Hierbei können die Energiespeicher (Federn) in einer Gleitschale geführt werden. In einer anderen Ausgestaltung der Erfindung werden die Federn mittels Gleitschuhe geführt, d.h., dass die Federn auf ihrer radialen Außenseite mit Gleitschuhen versehen sind, die mittels mindestens einer Rastnase zwischen mindestens zwei Windungen der Federn eingreifen. In einer weiteren Ausgestaltung dieses Gedankens sind zwischen einer radial außen liegenden Gleitbahn und den Gleitschuhen auch noch Rollen angeordnet, damit die Reibung reduziert wird.

Das Dämpfungsverhalten eines Torsionsschwingungsdämpfers 12 kann in wesentlicher Weise durch die Dimensionierung von Reibungen innerhalb des Torsionsschwingungsdämpfers 12 bestimmt werden. Deshalb kann in einer ersten Ausgestaltung dieser Erfindung der Torsionsschwingungsdämpfer 12 mit einer Fettschmierung versehen sein. In einer zweiten Ausgestaltung ist der Torsionsschwingungsdämpfer 12 mit einer Ölschmierung versehen, wobei hierbei darauf geachtet werden muss, dass das Öl nicht abgeschleudert wird. In einer weiteren vorteilhaften Ausgestaltung der Erfindung kann die Ölschmierung als Bestandteil der Ölschmierung der Brennkraftmaschine 1 ausgestaltet sein.

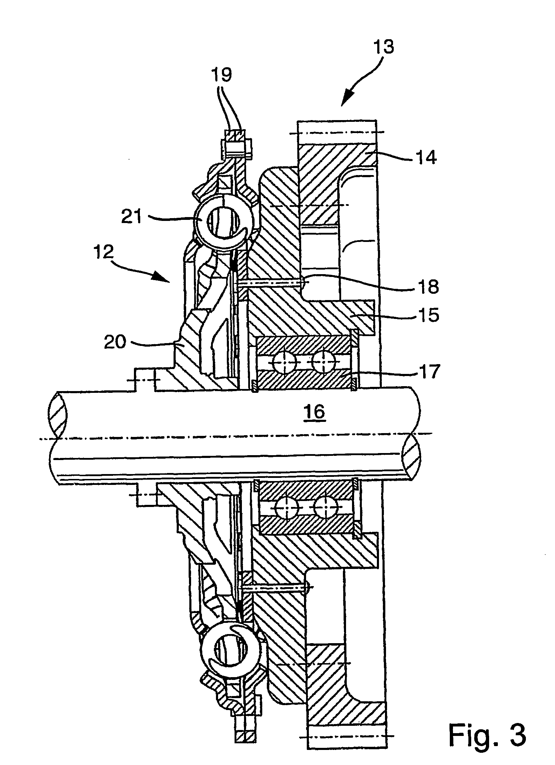

Mit der Figur 3 wird ein Torsionsschwingungsdämpfer 12 offenbart, der mit umfänglich wirkenden Energiespeichern ausgerüstet ist. Diese Energiespeicher sind Schraubenfedern 21. Über ein Zahnrad 14 erfolgt eine Momenteinleitung von der Verbundtriebwerks-Turbine 7. Das Zahnrad 14 ist drehfest mit einer Zusatzmasse 15 verbunden, welches mittels eines Lagers 17 auf einer Welle 16 angeordnet ist. Das Zahnrad 14 und die Zusatzmasse 15 können erfindungsgemäß auch einstückig ausgeführt werden. Mittels einer beispielsweise als Nietverbindung 18 ausgestalteter Fixierung folgt der Kraftfluß in das Eingangsteil 19, wobei das Eingangsteil 19 aus zwei miteinander vernieteten Scheiben besteht. Von dem Eingangsteil 19 erfolgt über die Federn 21 dann der Kraftfluß in ein Ausgangsteil 20. Wie aus der Figur 3 zu entnehmen ist, berührt das Ausgangsteil 20 das linke Eingangsteil 19. Dieses wird erzielt, indem zwischen dem Ausgangsteil 20 und dem rechten Eingangsteil 19 beispielsweise eine Tellerfeder angeordnet ist. Je nach Dimensionierung dieser Tellerfeder kommt es dann zwischen dem Eingangsteil 19 und dem Ausgangsteil 20 zu einer definierten Reibung, die ein Teil der Schwingungsenergie abführen kann. Diese dosierte Reibung kann aber auch nachteilig sein, denn bei den Relativdrehbewegungen zwischen dem Eingangsteil 19 und dem Ausgangsteil 20 kommt es somit zu Schleppmomenten.

In einer weiteren Ausgestaltung der Erfindung versucht man die Reibung zwischen dem Eingangsteil 19 und dem Ausgangsteil 20 so gering wie möglich zu halten. Man spricht dann auch von einer so genannten Schwingungsisolation. Bei der Schwingungsisolation ist die Frequenzgangkurve sehr engbandig, welches den Vorteil hat, dass die Eigenfrequenz des Torsionsschwingungsdämpfers 12 klarer definiert werden kann und damit konstruktiv auch eindeutig außerhalb des Betriebsspektrums gelegt werden kann.

In einer weiteren Ausgestaltung der Erfindung befindet sich in dem Kraftfluß zwischen der Abgasturbine 7 und dem Einspeisungspunkt an der Kurbelwelle oder dem Schwungrad, ein Tilger. Dieser Tilger kann so ausgelegt werden, dass er in Gegenphase schwingt.

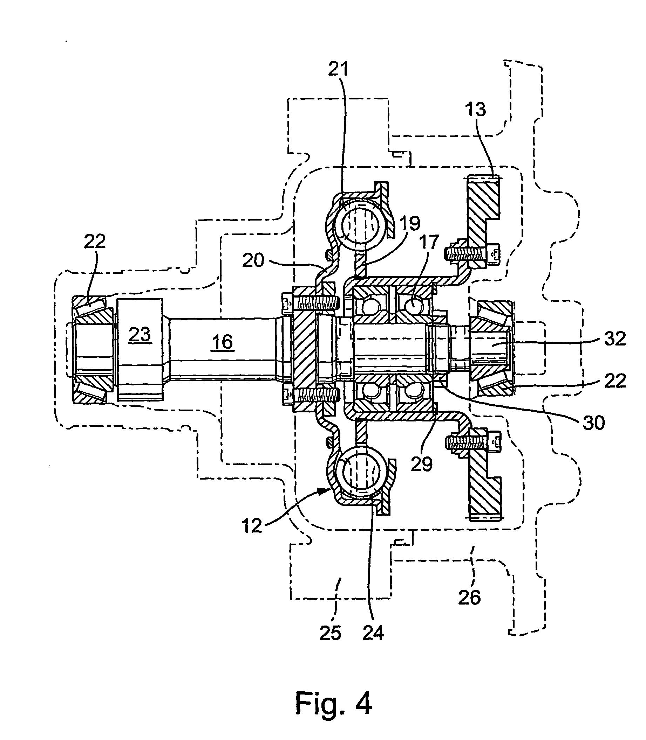

In der Figur 4 ist ein Verbundtriebwerk dargestellt, welches in einem Gehäuse - bestehend aus den Gehäuseteilen 25, 26 - angeordnet ist. Die Welle 16 wird mittels Wälzlager 22 geführt. Die Momenteneinleitung 13 erfolgt hier an dem größeren Zahnrad. Ein Abtriebszahnrad 23 weist einen kleineren Durchmesser auf. Dies ist damit zu erklären, dass die Drehzahlen von der hochtourigen Verbundtriebwerks-Turbine 7 zur mechanischen Verbindung 11 zur Kurbelwelle reduziert werden müssen.

Wie bereits erläutert, tritt der Momentenfluss über die Momenteinleitung 13 in das Verbundtriebwerk ein. Mittels einer lösbaren Verbindung ist die Momenteinleitung 13 mit einer Hülse verbunden, die mittels zweier Wälzlager 17 auf der Welle 16 gelagert ist. Mit der Hülse ist das Eingangsteil 19 des Torsionsschwingungsdämpfers 12 drehfest verbunden. Die Federn 21 des Torsionsschwingungsdämpfers 12 sind in dem Ausführungsbeispiel der Figur 4 radial außen mittels einer Gleitschale 24 geführt. Das Ausgangsteil 20 des Torsionsschwingungsdämpfers 12 ist wiederum mit der Welle 16 drehfest verbunden. Durch die präzise Lagerung sowohl des Eingangsteiles 19, als auch des Ausgangsteiles 20 - sowohl axial als auch radial - ist ein präzises Arbeiten des Torsionsschwingungsdämpfers 12 möglich.

Die Welle 16 weist an ihrem rechten Ende einen Ölkanal 32 auf, der wegen seiner verdeckten Lage gestrichelt dargestellt ist. Dieser Ölkanal 32 weist auch noch zwei Querkanäle auf, wodurch gezielt Öl zum Torsionsschwingungsdämpfer 12 als auch zur Momenteneinleitung 13 gelenkt werden kann. Die Zufuhr für den Ölkanal 32 - hier nicht dargestellt - kann vorteilhafter Weise im Bereich des rechten Lagers 22 in dem rechten Gehäuseteil 26 angeordnet sein. Es bleibt noch zu erwähnen, dass die Schrägkugellager 17 in der Hülse bzw. auf der Welle 16 mittels einer Kontermutter 30 bzw. mittels eines Sicherungsringes 29 fixiert sind.

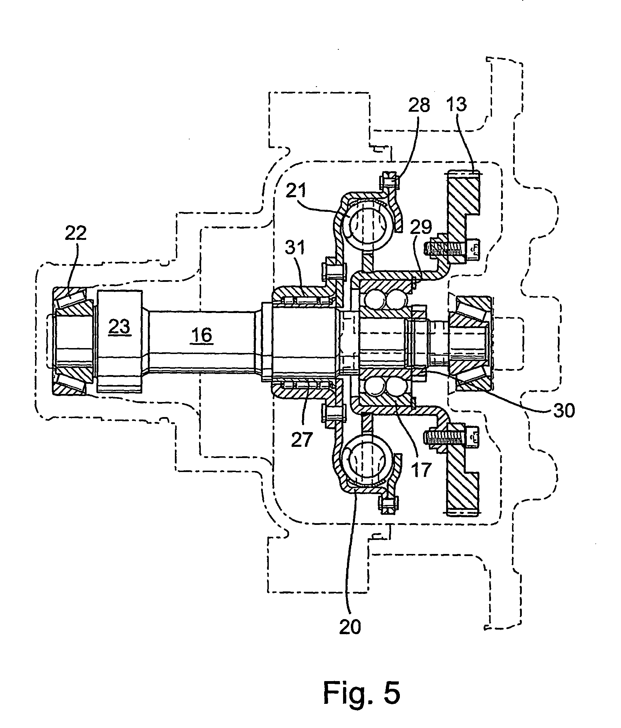

Die Figur 5 unterscheidet sich dahingehend zur Figur 4, dass sie mit einem Freilauf 31 versehen ist. Dieser Freilauf 31 ist derart ausgelegt, dass er bei einem Momentenfluss von der Momenteneinleitung 13 zum Abtriebszahnrad 23 sperrt. Mit anderen Worten: Wenn die Welle 16 schneller dreht als das Ausgangsteil 20, so kann die Welle 16 frei drehen. Der Freilauf ist deshalb aus energetischen Gesichtspunkten besonders dann wirkungsvoll, wenn der Motor gestartet oder wenn beschleunigt wird. In diesen Fällen ist der Verbrennungsmotor schneller als die Abgasturbine 7, weil die Abgasturbine 7 immer etwas Zeit braucht, bis sie auf ihre optimale Betriebsdrehzahl gekommen ist.

Da ein Torsionsschwingungsdämpfer 12 meistens schwellend betrieben wird - das heißt, eine Grundlast mit überlagerter Welligkeit - kommt in diesem Fall der Freilauf 31 nicht zum Einsatz. Ist die Grundlast aber gering und sind die Schwingungsamplituden entsprechend groß, so können die Schwingungen über die Nulllage hinausgehen. In diesen Fällen ist der Freilauf 31 auch für das Dämpfungsverhalten des Torsionsschwingungsdämpfers 12 vorteilhaft.

In dem Ausführungsbeispiel der Figur 5 ist der Freilauf 31 zwischen einer äußeren Hülse und der Welle 16 angeordnet. Die Wälzkörper des Freilaufes 31 laufen aber in diesem Ausführungsbeispiel nicht direkt auf der Welle 16, sondern sie laufen auf einer Innenhülse 27, die vorzugsweise oberflächengehärtet ist. Diese Innenhülse 27 ist dann beispielsweise mittels einer Schrumpfverbindung auf der Welle 16 fixiert.

### Bezugszeichenliste

- 1: Brennkraftmaschine (Motor)
- 2: Kupplung
- 3: Getriebeeingangswelle
- 4: Turbolader
- 4a: Abgasturbine
- 4b: Ladeluftturbine
- 5: Abgasleitung
- 5a: Abgasleitung zwischen Motor und Turbolader
- 5b: Abgasleitung zwischen Turbolader und weiterer Abgasturbine (Verbundtriebwerks-Turbine)
- 6a: Ladeluftstrom (zwischen Turbolader und Motor)
- 6b: Ladeluftstrom (auf Eintrittsseite des Turboladers)
- 7: Verbundtriebwerks-Turbine
- 8: Reduktionsgetriebe (zwischen Verbundtriebwerks-Turbine und Föttinger-Kupplung
- 9: Föttinger-Kupplung
- 10: Reduktionsgetriebe
- 11: mechanische Verbindung zur Kurbelwelle bzw. zum Schwungrad
- 12: Torsionsschwingungsdämpfer/Schwingungsisolierer
- 13: Momenteinleitung von Verbundtriebwerks-Turbine
- 14: Zahnrad
- 15: Zusatzmasse
- 16: Welle
- 17: Wälzlager
- 18: Nietverbindung
- 19: Eingangsteil
- 20: Ausgangsteil
- 21: Feder
- 22: Wälzlager der Welle 16
- 23: Abtriebszahnrad
- 24: Gleitschale
- 25: Gehäuseteil
- 26: Gehäuseteil
- 27: Innenhülse
- 28: Nietverbindung
- 29: Sicherungsring
- 30: Kontermutter
- 31: Freilauf
- 32: Ölkanal

## Patentansprüche

1. Verbundtriebwerk in Verbindung mit einer Brennkraftmaschine (1) mit mindestens einer Abgasturbine (7) in dem Abgasstrom, wobei die Energie der Abgasturbine (7) in dem Kraftfluss von Brennkraftmaschine (1) zu einer Kurbelwelle oder einer Schwungscheibe eingespeist wird, wobei zwischen der Abgasturbine (7) und dem Einspeisungspunkt ein Drehzahl-Reduktionsgetriebe (8, 10) angeordnet ist, **dadurch gekennzeichnet, dass** in dem Kraftfluss von der Abgasturbine (7) zum Einspeisungspunkt, ein Torsionsschwingungsdämpfer (12) - mit mindestens je einem Eingangsteil (19) und Ausgangsteil (20) - angeordnet ist, wobei der Torsionsschwingungsdämpfer (12) mit umfänglich wirkenden Energiespeichern versehen ist, die als Schraubenfedern (21) ausgebildet sind.

2. Verbundtriebwerk nach Anspruch 1, **dadurch gekennzeichnet, dass** in dem Abgasstrom zwischen der Abgasturbine (7) und der Brennkraftmaschine (1) ein Turbolader (4) angeordnet ist.

3. Verbundtriebwerk nach Anspruch 1 oder 2, **dadurch gekennzeichnet, dass** eine Zusatzmasse (15) mit dem mindestens einen Eingangsteil (19) drehfest verbunden ist.

4. Verbundtriebwerk nach einem der Ansprüche 1 bis 3, **dadurch gekennzeichnet, dass** eine Zusatzmasse (15) mit dem mindestens einen Ausgangsteil (19) drehfest verbunden ist.

5. Verbundtriebwerk nach einem der Ansprüche 1 bis 4, **dadurch gekennzeichnet, dass** die Federn (21) des Torsionsschwingungsdämpfers (12) - zumindest abschnittsweise - an ihrem Außendurchmesser, umfänglich in einer Gleitschale geführt werden.

6. Verbundtriebwerk nach einem der Ansprüche 1 bis 4, **dadurch gekennzeichnet, dass** die Federn (21) des Torsionsschwingungsdämpfers (12) - zumindest abschnittsweise - an ihrem Außendurchmesser, umfänglich von Gleitschuhen geführt werden, wobei die Gleitschuhe zwischen zwei Windungen der Federn (21) mittels einer Rastnase fixiert sind.

7. Verbundtriebwerk nach Anspruch 6, **dadurch gekennzeichnet, dass** die Gleitschuhe mit Rollen versehen sind, wobei die Rollen zwischen den Gleitschuhen und einer umfänglichen Gleitbahn angeordnet sind.

8. Verbundtriebwerk nach einem der Ansprüche 1 bis 7, **dadurch gekennzeichnet, dass** Energiespeicher mit unterschiedlichen Federkennlinien kombiniert werden.

9. Verbundtriebwerk nach einem der Ansprüche 1 bis 8, **dadurch gekennzeichnet, dass** die Energiespeicher in Reihe angeordnet werden.

10. Verbundtriebwerk nach einem der Ansprüche 1 bis 9, **dadurch gekennzeichnet, dass** die Energiespeicher parallel angeordnet werden.

11. Verbundtriebwerk nach einem der Ansprüche 1 bis 10, **dadurch gekennzeichnet, dass** der Torsionsschwingungsdämpfer (12) mit einer Fettschmierung versehen ist.

12. Verbundtriebwerk nach einem der Ansprüche 1 bis 10, **dadurch gekennzeichnet, dass** der Torsionsschwingungsdämpfer (12) mit einer Ölschmierung versehen ist.

13. Verbundtriebwerk nach Anspruch 12, **dadurch gekennzeichnet, dass** die Ölschmierung mit der Ölschmierung der Brennkraftmaschine (1) gekoppelt ist.

14. Verbundtriebwerk nach einem der Ansprüche 1 bis 13, **dadurch gekennzeichnet, dass** der Torsionsschwingungsdämpfer (12) in seiner Eigenfrequenz abstimmbar gestaltet ist.

15. Verbundtriebwerk nach einem der Ansprüche 1 bis 14, **dadurch gekennzeichnet, dass** der Torsionsschwingungsdämpfer (12) in seinem Dämpfungsverhalten abstimmbar gestaltet ist.

16. Verbundtriebwerk nach einem der Ansprüche 1 bis 15, **dadurch gekennzeichnet, dass** der aus dem Torsionsschwingungsdämpfer (12) kommende Kraftfluss in die am Kurbelwellenende angeordnete Schwungscheibe eingespeist wird.

17. Verbundtriebwerk nach einem der Ansprüche 1 bis 15, **dadurch gekennzeichnet, dass** der aus dem Torsionsschwingungsdämpfer (12) kommende Kraftfluss in die Kurbelwelle eingespeist wird.

18. Verbundtriebwerk nach einem der Ansprüche 1 bis 17, **dadurch gekennzeichnet, dass** der Torsionsschwingungsdämpfer (12) mit einem Freilauf versehen ist.

19. Verbundtriebwerk nach einem der Ansprüche 1 bis 18, **dadurch gekennzeichnet, dass** der Torsionsschwingungsdämpfer (12) als Schwingungsisolator ausgebildet ist.

20. Verbundtriebwerk nach einem der Ansprüche 1 bis 19, **dadurch gekennzeichnet, dass** in dem Antriebsstrang zwischen Abgasturbine (7) und dem Einspeisungspunkt ein Tilger angeordnet ist.

21. Verbundtriebwerk nach einem der Ansprüche 1 bis 20, **dadurch gekennzeichnet, dass** der Torsionsschwingungsdämpfer in der Weise gestaltet ist, dass mindestens ein axial wirkender Energiespeicher auf umfänglich gestalteten Rampen und darauf abrollenden Wälzkörpern einwirkt.

## Claims

1. Compound engine in connection with an internal combustion engine (1) with at least one exhaust gas turbine (7) in the exhaust gas flow, the energy of the exhaust gas turbine (7) being fed in the force flow from internal combustion engine (1) to a crankshaft or a flywheel, a rotational speed reduction transmission (8, 10) being arranged between the exhaust gas turbine (7) and the feed-in point, **characterized in that** a torsional oscillation damper (12) - with at least in each case one input part (19) and output part (20) - is arranged in the force flow from the exhaust gas turbine (7) to the feed-in point, the torsional oscillation damper (12) being provided with circumferentially acting energy reservoirs which are formed as helical springs (21).

2. Compound engine according to Claim 1, **characterized in that** a turbocharger (4) is arranged in the exhaust gas flow between the exhaust gas turbine (7) and the internal combustion engine (1).

3. Compound engine according to Claim 1 or 2, **characterized in that** an additional mass (15) is connected in a rotationally fixed manner to the at least one input part (19).

4. Compound engine according to one of Claims 1 to 3, **characterized in that** an additional mass (15) is connected in a rotationally fixed manner to the at least one output part (20).

5. Compound engine according to one of Claims 1 to 4, **characterized in that** the springs (21) of the torsional oscillation damper (12) - at least in portions - at their outer diameter, are guided circumferentially in a sliding shell.

6. Compound engine according to one of Claims 1 to 4, **characterized in that** the springs (21) of the torsional oscillation damper (12) - at least in portions - at their outer diameter, are guided circumferentially by sliding blocks, the sliding blocks being fixed between two turns of the springs (21) by means of a detent.

7. Compound engine according to Claim 6, **characterized in that** the sliding blocks are provided with rollers, the rollers being arranged between the sliding blocks and a circumferential sliding track.

8. Compound engine according to one of Claims 1 to 7, **characterized in that** energy reservoirs with different spring characteristics are combined.

9. Compound engine according to one of Claims 1 to 8, **characterized in that** the energy reservoirs are arranged in a row.

10. Compound engine according to one of Claims 1 to 9, **characterized in that** the energy reservoirs are arranged in parallel.

11. Compound engine according to one of Claims 1 to 10, **characterized in that** the torsional oscillation damper (12) is provided with grease lubrication.

12. Compound engine according to one of Claims 1 to 10, **characterized in that** the torsional oscillation damper (12) is provided with oil lubrication.

13. Compound engine according to Claim 12, **characterized in that** the oil lubrication is coupled to the oil lubrication of the internal combustion engine (1).

14. Compound engine according to one of Claims 1 to 13, **characterized in that** the torsional oscillation damper (12) is configured so that it can be adjusted in terms of its natural frequency.

15. Compound engine according to one of Claims 1 to 14, **characterized in that** the torsional oscillation damper (12) is configured so that it can be adjusted in terms of its damping behaviour.

16. Compound engine according to one of Claims 1 to 15, **characterized in that** the force flow coming from the torsional oscillation damper (12) is fed into the flywheel arranged at the crankshaft end.

17. Compound engine according to one of Claims 1 to 15, **characterized in that** the force flow coming from the torsional oscillation damper (12) is fed into the crankshaft.

18. Compound engine according to one of Claims 1 to 17, **characterized in that** the torsional oscillation damper (12) is provided with a free-wheel.

19. Compound engine according to one of Claims 1 to 18, **characterized in that** the torsional oscillation damper (12) is formed as an oscillation isolator.

20. Compound engine according to one of Claims 1 to 19, **characterized in that** an absorber is arranged in the drivetrain between exhaust gas turbine (7) and the feed-in point.

21. Compound engine according to one of Claims 1 to 20, **characterized in that** the torsional oscillation damper is configured in such a manner that at least one axially acting energy reservoir acts on circumferentially configured ramps and roll bodies rolling off thereon.

## Revendications

1. Mécanisme de transmission mixte en liaison avec un moteur à combustion interne (1) comprenant au moins une turbine à gaz d'échappement (7) dans le courant de gaz d'échappement, l'énergie de la turbine à gaz d'échappement (7) étant injectée dans le flux de force allant du moteur à combustion interne (1) à un vilebrequin ou à un volant d'inertie, un réducteur de régime (8 ; 10) étant disposé entre la turbine à gaz d'échappement (7) et le point d'injection, **caractérisé en ce que** dans le flux de force allant de la turbine à gaz d'échappement (7) au point d'injection, est disposé un amortisseur de vibrations de torsion (12) - comprenant à chaque fois au moins une partie d'entrée (19) et une partie de sortie (20) - l'amortisseur de vibrations de torsion (12) étant pourvu d'accumulateurs d'énergie agissant sur la périphérie, qui sont réalisés sous forme de ressorts à boudin (21).

2. Mécanisme de transmission mixte selon la revendication 1, **caractérisé en ce qu'**un turbocompresseur (4) est disposé dans le courant de gaz d'échappement entre la turbine à gaz d'échappement (7) et le moteur à combustion interne (1).

3. Mécanisme de transmission mixte selon la revendication 1 ou 2, **caractérisé en ce qu'**une masse supplémentaire (15) est connectée de manière solidaire en rotation avec l'au moins une partie d'entrée (19).

4. Mécanisme de transmission mixte selon l'une quelconque des revendications 1 à 3, **caractérisé en ce qu'**une masse supplémentaire (15) est connectée de manière solidaire en rotation avec l'au moins une partie de sortie (20).

5. Mécanisme de transmission mixte selon l'une quelconque des revendications 1 à 4, **caractérisé en ce que** les ressorts (21) de l'amortisseur de vibrations de torsion (12) sont guidés - au moins en partie - au niveau de leur diamètre extérieur, dans une coque de glissement sur la périphérie.

6. Mécanisme de transmission mixte selon l'une quelconque des revendications 1 à 4, **caractérisé en ce que** les ressorts (21) de l'amortisseur de vibrations de torsion (12) sont guidés - au moins en partie - au niveau de leur diamètre extérieur, sur la périphérie par des patins de glissement, les patins de glissement étant fixés au moyen d'un nez d'encliquetage entre deux spires des ressorts (21).

7. Mécanisme de transmission mixte selon la revendication 6, **caractérisé en ce que** les patins de glissement sont pourvus de rouleaux, les rouleaux étant disposés entre les patins de glissement et une piste de glissement périphérique.

8. Mécanisme de transmission mixte selon l'une quelconque des revendications 1 à 7, **caractérisé en ce que** des accumulateurs d'énergie sont combinés avec différentes caractéristiques de ressorts.

9. Mécanisme de transmission mixte selon l'une quelconque des revendications 1 à 8, **caractérisé en ce que** les accumulateurs d'énergie sont disposés en série.

10. Mécanisme de transmission mixte selon l'une quelconque des revendications 1 à 9, **caractérisé en ce que** les accumulateurs d'énergie sont disposés en parallèle.

11. Mécanisme de transmission mixte selon l'une quelconque des revendications 1 à 10, **caractérisé en ce que** l'amortisseur de vibrations de torsion (12) est pourvu d'une graisse de lubrification.

12. Mécanisme de transmission mixte selon l'une quelconque des revendications 1 à 10, **caractérisé en ce que** l'amortisseur de vibrations de torsion (12) est pourvu d'une huile de lubrification.

13. Mécanisme de transmission mixte selon la revendication 12, **caractérisé en ce que** l'huile de lubrification est couplée à l'huile de lubrification du moteur à combustion interne (1).

14. Mécanisme de transmission mixte selon l'une quelconque des revendications 1 à 13, **caractérisé en ce que** l'amortisseur de vibrations de torsion (12) est configuré de manière à pouvoir être ajusté dans sa fréquence propre.

15. Mécanisme de transmission mixte selon l'une quelconque des revendications 1 à 14, **caractérisé en ce que** l'amortisseur de vibrations de torsion (12) est configuré de manière à pouvoir être ajusté dans son comportement d'amortissement.

16. Mécanisme de transmission mixte selon l'une quelconque des revendications 1 à 15, **caractérisé en ce que** le flux de force provenant de l'amortisseur de vibrations de torsion (12) est injecté dans le volant d'inertie disposé à l'extrémité du vilebrequin.

17. Mécanisme de transmission mixte selon l'une quelconque des revendications 1 à 15, **caractérisé en ce que** le flux de force provenant de l'amortisseur de vibrations de torsion (12) est injecté dans le vilebrequin.

18. Mécanisme de transmission mixte selon l'une quelconque des revendications 1 à 17, **caractérisé en ce que** l'amortisseur de vibrations de torsion (12) est pourvu d'une roue libre.

19. Mécanisme de transmission mixte selon l'une quelconque des revendications 1 à 18, **caractérisé en ce que** l'amortisseur de vibrations de torsion (12) est réalisé sous forme d'isolateur de vibrations.

20. Mécanisme de transmission mixte selon l'une quelconque des revendications 1 à 19, **caractérisé en ce qu'**un amortisseur est disposé dans la chaîne cinématique entre la turbine à gaz d'échappement (7) et le point d'injection.

21. Mécanisme de transmission mixte selon l'une quelconque des revendications 1 à 20, **caractérisé en ce que** l'amortisseur de vibrations de torsion est configuré de telle sorte qu'au moins un accumulateur d'énergie agissant axialement agisse sur des rampes configurées sur la périphérie et sur des corps de roulement roulant sur celles-ci.
